# EUROPEAN PATENT APPLICATION

(11) **EP 4 716 284 A1**
(43) Date of publication of application: **25.03.2026**
(21) Application number: 23951709.7
(22) Date of filing: 11.09.2023
(51) Int. Cl.: H04W 24/08

(54) **METHOD FOR DATA TRANSMISSION, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: WANG, Yaxin, Dongguan, Guangdong 523860 (CN); GUO, Yali, Dongguan, Guangdong 523860 (CN)
(74) Representative: Mewburn Ellis LLP
(86) International application number: PCT/CN2023/117996
(87) International publication number: WO 2025/054761

(57) **Abstract**

A data transmission method and a communication device are provided. The method includes the following. A first device sends a first message to a second device. The first message is used to configure control plane (CP) transmission and/or user plane (UP) transmission. Both the CP transmission and the UP transmission are used for service data transmission of a first service. The first message includes first information and second information. The first information corresponds to the CP transmission. The second information corresponds to the UP transmission.

## Description

### TECHNICAL FIELD

This disclosure relates to the field of communication technology, and more specifically, to a data transmission method and a communication device.

### BACKGROUND

In wireless communication systems, service data of certain services (such as a location service and/or a sensing service) only supports single transmission mode and does not support switching between different transmission modes, resulting in insufficient flexibility in transmission modes.

### SUMMARY

A data transmission method and a communication device are provided in embodiments of the disclosure. The following will introduce various aspects involved in embodiments of the disclosure in detail.

In a first aspect, a data transmission method is provided. The method includes the following. A first device sends a first message to a second device. The first message is used to configure control plane (CP) transmission and/or user plane (UP) transmission. Both the CP transmission and the UP transmission are used for service data transmission of a first service. The first message includes first information and second information. The first information corresponds to the CP transmission. The second information corresponds to the UP transmission.

In a second aspect, a data transmission method is provided. The method includes the following. A second device receives a first message sent by a first device. The first message is used to configure CP transmission and/or UP transmission. Both the CP transmission and the UP transmission are used for service data transmission of a first service. The first message includes first information and second information. The first information corresponds to the CP transmission. The second information corresponds to the UP transmission.

In a third aspect, a communication device is provided. The communication device is a first device. The first device includes a communication module configured to send a first message to a second device. The first message is used to configure CP transmission and/or UP transmission. Both the CP transmission and the UP transmission are used for service data transmission of a first service. The first message includes first information and second information. The first information corresponds to the CP transmission. The second information corresponds to the UP transmission.

In a fourth aspect, a communication device is provided. The communication device includes a second device. The second device includes a communication module configured to receive a first message sent by a first device. The first message is used to configure CP transmission and/or UP transmission. Both the CP transmission and the UP transmission are used for service data transmission of a first service. The first message includes first information and second information. The first information corresponds to the CP transmission. The second information corresponds to the UP transmission.

In a fifth aspect, a communication device is provided. The communication device includes a transceiver, a memory, and a processor. The memory is configured to store computer programs. The processor is configured to invoke the computer programs stored in the memory, and to control the transceiver to receive or send signals, to cause the communication device to perform the method of the first aspect or the second aspect.

In a sixth aspect, an apparatus is provided. The apparatus includes a processor. The processor is configured to invoke computer programs stored in a memory, to cause the apparatus to perform the method of the first aspect or the second aspect.

In a seventh aspect, a chip is provided. The chip includes a processor. The processor is configured to invoke computer programs stored in a memory, to cause a device equipped with the chip to perform the method of the first aspect or the second aspect.

In an eighth aspect, a computer-readable storage medium is provided. The computer-readable storage medium is configured to store computer programs. The computer programs are operable with a computer to perform the method of the first aspect or the second aspect.

In a ninth aspect, a computer program product is provided. The computer program product includes computer programs. The computer programs are operable with a computer to perform the method of the first aspect or the second aspect.

In a tenth aspect, a computer program is provided. The computer program is operable with a computer to perform the method of the first aspect or the second aspect.

By carrying both information corresponding to the UP transmission and information corresponding to the CP transmission in a configuration message (i.e., the above first message) of the UP transmission and/or the CP transmission of the first service, the service data transmission of the first service can be helped to switch between multiple transmission modes, thereby improving transmission flexibility.

### BRIEF DESCRIPTION OF THE DRAWINGS

FIG. 1 is a schematic system architectural diagram of a wireless communication system to which embodiments of the disclosure are applicable.
FIG. 2 is a schematic diagram of the fifth generation (5G) system architecture.
FIG. 3 is a schematic system architectural diagram of a sensing service.
FIG. 4 is a schematic system architectural diagram of a location service.
FIG. 5 is a schematic flow diagram of configuration and data transmission of control plane (CP) of a sensing/location service.
FIG. 6 is a schematic flow diagram of configuration and data transmission of user plane (UP) of a sensing/location service.
FIG. 7 is a schematic flow diagram of a data transmission method provided in embodiments of the disclosure.
FIG. 8 is a schematic flow diagram of a more specific implementation of the method illustrated in FIG. 7.
FIG. 9 is a schematic flow diagram of another more specific implementation of the method illustrated in FIG. 7.
FIG. 10 is a schematic flow diagram of yet another more specific implementation of the method illustrated in FIG. 7.
FIG. 11 is a schematic structural diagram of a communication device provided in an embodiment of the disclosure.
FIG. 12 is a schematic structural diagram of a communication device provided in another embodiment of the disclosure.
FIG. 13 is a schematic structural diagram of an apparatus that can be used in embodiments of the disclosure.

### DETAILED DESCRIPTION

The following will describe the technical solutions of the disclosure with reference to the accompanying drawings.

### Communication System Architecture

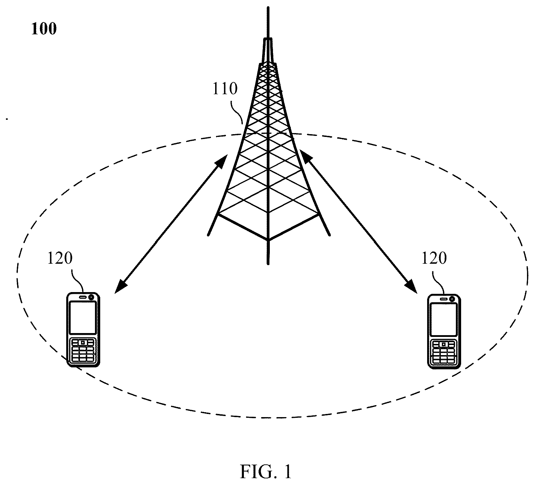

FIG. 1 is a schematic system architectural diagram of a wireless communication system 100 to which embodiments of the disclosure are applicable. The wireless communication system 100 may include a network device 110 and a terminal device 120. The network device 110 may be a device that can communicate with the terminal device 120. The network device 110 can provide a communication coverage for a specific geographical area and communicate with the terminal device 120 in the coverage area.

FIG. 1 exemplarily illustrates one network device and one terminal device. Optionally, the wireless communication system 100 may include one or more network devices 110 and/or one or more terminal devices 120. For one network device 110, the one or more terminal devices 120 may all be within a network coverage area of the network device 110, may all be outside the network coverage area of the network device 110, or may some be within the coverage area of the network device 110 and others be outside the network coverage area of the network device 110. Embodiments of the disclosure are not limited in this regard.

Optionally, the wireless communication system 100 may further include other network entities such as a network controller, a mobility management entity, etc., and embodiments of the disclosure are not limited in this regard.

It can be understood that, the technical solutions of the disclosure are applicable to various communication systems, such as the fifth generation (5G) system or a new radio (NR) system, a long term evolution (LTE) system, an LTE frequency division duplex (FDD) system, an LTE time division duplex (LTE-TDD) system, etc. The technical solutions of the disclosure are also applicable to a future communication system, such as the sixth generation (6G) mobile communication system, a satellite communication system, etc.

A terminal device in embodiments of the disclosure may be referred to as a user equipment (UE), an access terminal, a subscriber unit, a subscriber station, a mobile station (MS), a mobile terminal (MT), a remote station, a remote terminal, a mobile device, a user terminal, a terminal device, a wireless communication device, a user agent, or a user device. The terminal device in embodiments of the disclosure may also be a device providing voice and/or data connectivity to users and may be used to connect people, objects, and machines, such as a handheld device with wireless connection functions, an in-vehicle device, etc. The terminal device in embodiments of the disclosure may be a mobile phone, a pad, a personal digital assistant (PDA), a mobile internet device (MID), a wearable device, a virtual reality (VR) terminal device, an augmented reality (AR) terminal device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, etc. Optionally, the UE can act as a base station. For example, the UE can serve as a scheduling entity providing sidelink signals between UEs in vehicle-to-everything (V2X) or device-to-device (D2D), etc. For instance, a cellular phone and a vehicle communicate with each other using sidelink signals. The cellular phone and a smart home device communicate without relaying communication signals through a base station.

The network device in embodiments of the disclosure may be a device used for communicating with the terminal device, and may also be referred to as an access network (AN) device or a wireless access network (AN) device, such as the base station. The network device in embodiments of the disclosure may refer to a radio access network (RAN) node (or device) for access of the terminal device to a radio network. The base station can be broadly covered by or replaced with various names as follows, such as: a Node B (NB), an evolved Node B (eNB), a next generation NodeB (gNB), a relay station, an access point (AP), a transmitting and receiving point (TRP), a transmitting point (TP), a master eNodeB (MeNB), a secondary eNodeB (SeNB), a multi-standard radio (MSR) node, a home base station, a network controller, an access node, a radio node, an access point (AP), a transmitting node, a transmitting and receiving node, a base band unit (BBU), a remote radio unit (RRU), an active antenna unit (AAU), a remote radio head (RRH), a central unit (CU), a distributed unit (DU), a location node, etc. The base station may be a macro base station, a micro base station, a relay node, a donor node, etc., or a combination thereof. The base station may also refer to a communication module, a modem, or a chip used in the aforementioned devices or apparatuses. The base station may be a mobile switching center, a device performing functions of the base station in D2D communication, V2X communication, and machine-to-machine (M2M) communication, a network-side device in a 6G network, a device performing functions of the base station in the future communication system, etc. The base station can support networks with the same or different access technologies. Specific technologies and specific device forms adopted by the network device are not limited in embodiments of the disclosure.

The base station can be either fixed or mobile. For example, a helicopter or a drone can be configured as a mobile base station, and one or more cells can move according to a position of the mobile base station. In other examples, the helicopter or the drone can be configured as a device communicating with another base station.

In some deployments, the network device in embodiments of the disclosure may refer to the CU or the DU, or, the network device includes the CU and the DU. The gNB may also include the AAU.

The network device and the terminal device can be deployed on land, which includes indoor or outdoor, handheld, or in-vehicle. The terminal device can also be deployed on water. The terminal device can also be deployed in an airplane, a balloon, a satellite in the air. The scenarios where the network device and the terminal device are located are not limited in embodiments of the disclosure.

It can be understood that all or some of the functions of the communication device in the disclosure can also be implemented through a software function running on a hardware, or through a virtualized function instantiated on a platform (such as a cloud platform).

### System Architectures of 5G Network, Sensing Service and Location Service

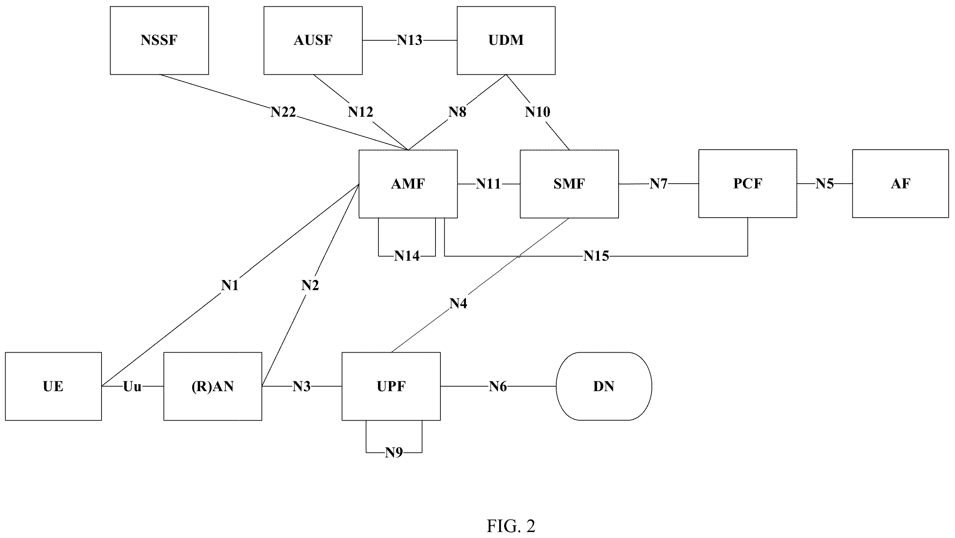

A system architecture of the 5G network is illustrated in FIG. 2. In this system architecture, a UE establishes an access stratum (AS) connection with an access node (AN) through an air interface (Uu interface), to exchange an AS message and perform wireless data transmission. The UE establishes a non-access stratum (NAS) connection with an access and mobility management function (AMF) through an N1 interface, to exchange an NAS message. In addition to performing mobility management for the UE, the AMF is also responsible for forwarding a session management-related message between the UE and a session management function (SMF). A policy control function (PCF) is responsible for providing policies related to mobility management, session management, and charging for the UE. A user plane function (UPF) performs data transmission with an external data network (DN) through an N6 interface, and performs data transmission with the access node (AN) through an N3 interface.

Current cellular networks (including the 5G network) are mainly used for wireless data transmission and communication. However, the wireless electromagnetic wave signals used in cellular networks can not only be used for wireless data transmission and communication, but also be capable of environmental sensing. For example, the wireless electromagnetic wave signals of cellular networks can be used for recognition of user actions or gestures, respiratory monitoring, mobile speed measurement of terminal device, environmental imaging, weather monitoring, etc. Therefore, cellular networks can also be used for sensing information acquisition.

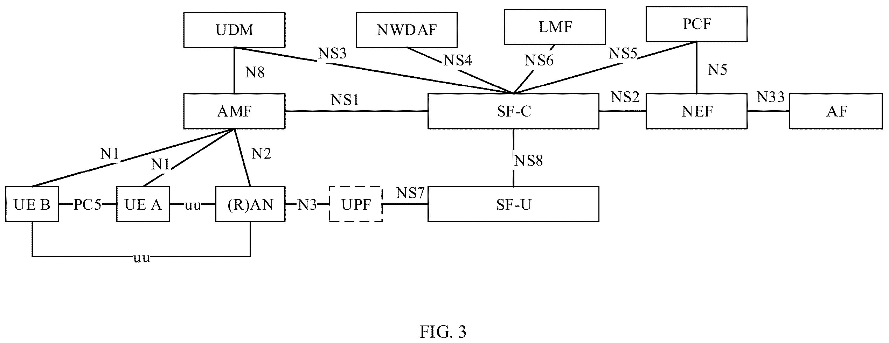

Currently, discussions are underway regarding supporting sensing capability in a beyond 5G (B5G) network. For example, by introducing a sensing function (SF) and corresponding processes, sensing capability can be supported in the 3rd generation partnership project (3GPP) network. FIG. 3 illustrates an example of a network system architecture supporting sensing capabilities. As illustrated in FIG. 3, the SF is introduced to a core network for performing sensing-related operations. After an application sends a sensing request to the core network of the 3GPP network, the core network can select the correct base station or auxiliary terminal device through the SF or the AMF, and trigger the base station or the auxiliary terminal device to activate sensing related wireless measurement capability, so as to start sensing information measurement and generate a sensing result.

Major sensing links or sensing methods of an integrated sensing and communication (ISAC) include the following:
1. gNB monostatic sensing: a base station sends a sensing signal and receives an echo signal.
2. gNB-gNB bistatic sensing: base station B receives a sensing signal sent by base station A.
3. UE-gNB uplink bistatic sensing: a base station receives a sensing signal sent by a terminal.
4. UE-gNB downlink bistatic sensing: a terminal receives a sensing signal sent by a base station.
5. UE monostatic sensing: a terminal sends a sensing signal and receives an echo signal.
6. UE-UE bistatic sensing: terminal B receives a sensing signal sent by terminal A.

In an initial stage of ISAC of B5G, it is feasible to reuse existing air interface signals for sensing as far as possible without introducing overmuch air interface enhancements. Furthermore, in view of the complexity of full-duplex implementation, sensing between the terminal device and/or the base station is prioritized. In sensing methods listed above, sensing methods 3 to 6 may require the terminal device to report a large amount of sensing data to the SF of the core network, or to obtain auxiliary data from a core function.

Currently, considering that the amount of interactive data between the terminal device and the SF is relatively large, the terminal device can perform necessary interaction for sensing service with the SF through user plane (UP) data transmission. For example, the terminal device can send sensing data to the SF through the UPF by establishing a protocol data unit (PDU) session (which can be a special PDU session). Taking the SF illustrated in FIG. 3 as an example, in some implementations, the SF may include a SF-C (sensing function-control plane function) and a SF-U (sensing function-user plane function). For example, the terminal device can send sensing data to the SF-U through the UPF. Of course, SF, SF-C, and SF-U are merely examples of the names of such functions; such functions may also have other names, or may be co-configured with a location management function (LMF). Embodiments of the disclosure are not limited in this regard. Meanwhile, for some sensing tasks, to save network resources, sensing nodes may be allowed to partially process the sensing data and transmit a small amount of data to the SF through the control plane (CP).

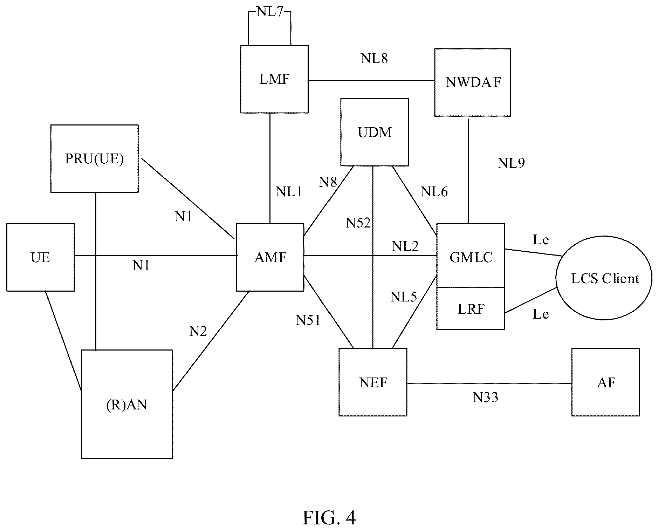

FIG. 4 illustrates a system architecture of a current location service. In this system architecture, the LMF can receive a location request through a gateway mobile location centre (GMLC), an application function (AF), a network exposure function (NEF), or the AMF. Then, the AMF can send a location task to the terminal device and determine a location of a target device based on a task execution result reported by the terminal device. Similar to the sensing service, the location service may also have a requirement for switching between control plane (CP) transmission and user plane (UP) transmission.

### Configuration and Data Transmission Flows of CP and UP of Sensing/Location Service

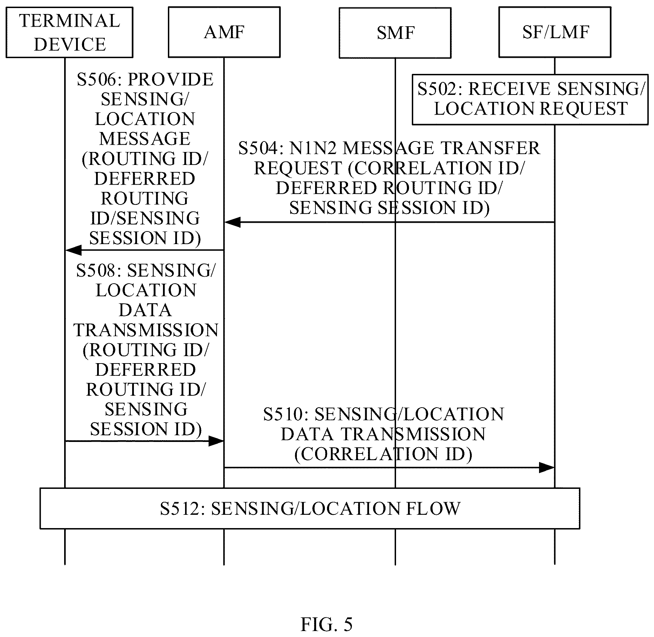

FIG. 5 illustrates a configuration and data transmission flow of the CP of a sensing/location service. The following will introduce each step illustrated in FIG. 5 in detail.

Step S502: an SF/LMF receives a sensing/location request from a function such as a GMLC/AF/NEF/AMF.

Step S504: the SF/LMF sends an N1N2 message transfer request to the AMF. The N1N2 message transfer request carries identity (ID) information of a sensing/location session. For example, the ID information of the sensing/location session may include one or more of: a correlation ID, a deferred routing ID, and a session ID. The correlation ID mentioned herein can be a location service (LCS) correlation ID or a sensing correlation ID, etc. The ID information of the sensing/location session can be used to identify a CP message or request. The correlation ID mentioned above can be assigned by the AMF in previous steps and sent to the SF/LMF; or, the correlation ID can be generated independently by the SF/LMF and sent to the AMF. The ID information such as the deferred routing ID or the session ID can be used to identify a periodic sensing/location session.

Step S506: the AMF provides a sensing/location message to a terminal device. For example, the AMF can determine a routing ID according to the correlation ID, and then provides the routing ID to the terminal device. Or, the AMF can send information such as the deferred routing ID/session ID to the terminal device by using a message container. The routing ID/deferred routing ID/session ID is a CP transmission ID of the terminal device. When the terminal device has a subsequent need to send data to the LMF/SF through the CP, the terminal device can use the CP transmission ID to determine a corresponding LMF/SF and a corresponding sensing/location session.

Step S508: after the terminal device performs a sensing/location measurement, the terminal device can send a sensing/location data transmission request to the AMF. The sensing/location data transmission request may include the routing ID/deferred routing ID/session ID.

Step S510: after the AMF receives the sensing/location data transmission request, the AMF can determine the SF/LMF and a correlation ID to-be-used, according to the routing ID/deferred routing ID/session ID and a locally-stored mapping relationship. Then, the AMF can send sensing/location data to the SF/LMF.

Step S512: if a sensing/location flow has not been completed, steps S504 to S510 can be repeated to continue interacting the sensing/location data through the CP.

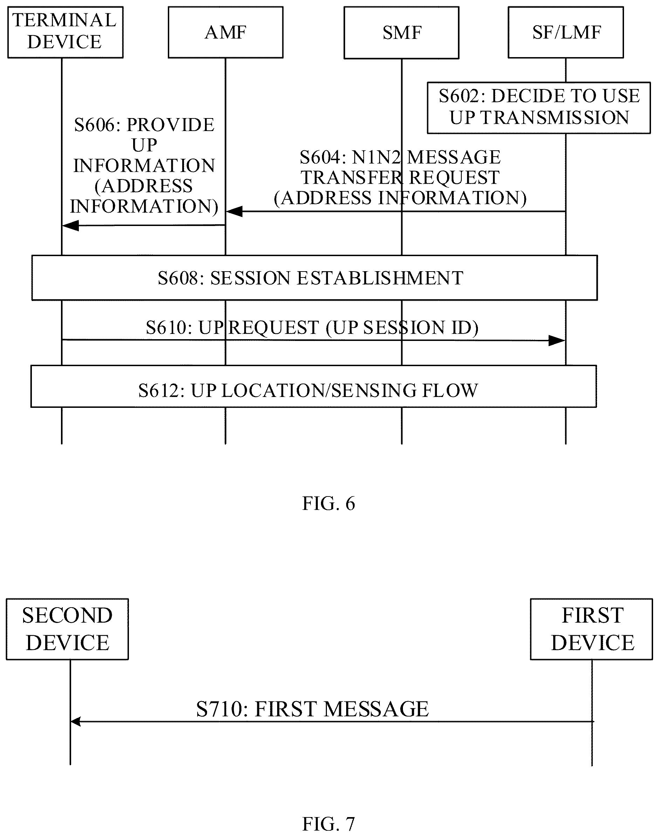

FIG. 6 illustrates a configuration and data transmission flow of the UP of the sensing/location service. The following will introduce each step illustrated in FIG. 6 in detail.

Step S602: after an SF/LMF receives a sensing/location request from a function such as a GMLC/AF/NEF/AMF, the SF/LMF decides to use UP to transmit sensing/location data.

Step S604: the SF/LMF sends an N1N2 message transfer request to the AMF. The N1N2 message transfer request may carry address information of the SF/LMF. The address information may be, for example, an internet protocol (IP) address and/or a fully qualified domain name (FQDN), etc.

Step S606: the AMF provides UP information (the address information of the SF/LMF) to a terminal device.

Step S608: after the terminal device receives the UP information, the terminal device triggers session establishment. For example, the terminal device can match a local UE route selection policy (URSP) rule according to the UP information, thereby triggering the session establishment.

Step S610: after the session establishment is completed, the terminal device can send a UP connection establishment request to the SF/LMF through the UP. For example, the terminal device can establish UP connection based on a certain protocol (such as a secure UP location (SUPL) system). During connection establishment, a UP protocol stack assigns a UP session ID.

Step S612: after the connection establishment is completed, the terminal device and the SF/LMF execute a UP sensing/location flow and exchange data through the UP.

In a wireless communication system, service data of certain services only supports single transmission mode, which is inflexible. For example, both a future sensing service and a location service provided by related technologies involve a CP data transmission service and a UP data transmission service. However, each of the location service and the sensing service support only using one data transmission mode for the same service, and do not support switching between CP transmission and UP transmission during executing task. For location and sensing service, especially long-term periodic location and sensing service, it is inflexible and cannot make full use of a network resource.

Regarding to the aforementioned problems, the following will illustrate the embodiments of the disclosure in detail.

FIG. 7 is a schematic flow diagram of a data transmission method provided in embodiments of the disclosure. The method illustrated in FIG. 7 can be performed by a first device and a second device. The first device may be a function (that is, network element) in a core network, and the second device may be a terminal device. Or, the first device may be the terminal device, and the second device may be the function in the core network.

The method illustrated in FIG. 7 includes step S710, where the first device sends a first message to the second device. The first message can be used to configure CP transmission and/or UP transmission.

In some implementations, the first message can be used to configure the UP transmission. Correspondingly, the first device can send the first message to the second device during switching of service data transmission from the CP transmission to the UP transmission.

In some implementations, the first message can be used to configure the CP transmission. Correspondingly, the first device can send the first message to the second device during switching of the service data transmission from the UP transmission to the CP transmission.

In some implementations, the first message can be used to configure both the CP transmission and the UP transmission (i.e., dual configuration). Correspondingly, the first device can send the first message to the second device during configuring the UP transmission and the CP transmission.

In some implementations, the CP transmission may also be referred to as or replaced with CP connection or a CP transmission path.

In some implementations, the UP transmission may also be referred to as or replaced with UP connection or a UP transmission path.

Both the CP transmission and the UP transmission are used for service data transmission of a first service. The service type of the first service is not limited in embodiments of the disclosure. For example, the first service may be a location service. For another example, the first service may be a sensing service.

The first message may include first information and second information. The first information is associated with or corresponds to the CP transmission, and the second information is associated with or corresponds to the UP transmission.

In embodiments of the disclosure, the first message (which is used to configure the CP transmission and/or the UP transmission) carries both information corresponding to the CP transmission and information corresponding to the UP transmission, which is helpful for switching between the CP transmission and the UP transmission.

In some implementations, the first information may be ID information corresponding to the CP transmission.

In some implementations, the ID information corresponding to the CP transmission includes one or more of: a correlation ID corresponding to the first service, a deferred routing ID corresponding to the first service, and a session ID corresponding to the first service (the session ID can be used for the sensing service, and can also be used for the location service).

For example, the first service is the location service, and the ID information corresponding to the CP transmission may include an LCS correlation ID and/or the deferred routing ID.

For another example, the first service is the sensing service, and the ID information corresponding to the CP transmission may include a sensing session ID.

In some implementations, the second information may be ID information corresponding to the UP transmission and/or UP information for session establishment.

In some implementations, the ID information corresponding to the UP transmission may include a user plane session identity (UP session ID).

In some implementations, the UP information for session establishment may include address information for session establishment. The address information may be address information of a function associated with the first service in the core network, such as address information of an SF and/or address information of an LMF. The address information mentioned herein may include one or more of: an IP address and an FQDN.

The following will describe the disclosure in more detail with reference to three embodiments.

### Embodiment 1: Switching from CP transmission to UP transmission

In some implementations, a first message mentioned above may refer to a message sent by a first device to a second device during switching of service data transmission from the CP transmission to the UP transmission.

In some implementations, before performing step S710, the CP transmission or service data of a first service based on the CP transmission may be configured first. For configuration and data transmission flow of the CP transmission, reference can be made to FIG. 5.

In some implementations, before performing step S710, the second device may first determine to switch from the CP transmission to the UP transmission. For example, the second device may determine whether to switch from the CP transmission to the UP transmission according to one or more of: signaling transmission load of the CP, a requirement of the first service (such as latency, accuracy), and a volume of the service data to-be-transmitted.

### Embodiment 1.1: first information may include ID information corresponding to the CP transmission, and second information may include UP information for session establishment.

In some implementations, the first device may be a function for sensing or location in a core network, such as an SF or an LMF. The second device may be a function for mobility management in the core network, such as an AMF. The SF/LMF can send the first message to the AMF, and the first message can carry the ID information corresponding to the CP transmission and the UP information for session establishment.

In some implementations, the first device may be the function for sensing or location in the core network, such as the SF or the LMF. The second device may be a terminal device. The SF/LMF can send the first message to the terminal device, and the first message can carry the ID information corresponding to the CP transmission and the UP information for session establishment. During implementation, the SF/LMF can send the first message to the terminal device through the AMF.

In some implementations, the first device may be the function for mobility management in the core network, such as the AMF. The second device may be the terminal device. The AMF can send the first message to the terminal device, and the first message can carry the ID information corresponding to the CP transmission and the UP information for session establishment.

In some implementations, the first message may be an N1N2 message transfer request. The first message may carry the ID information corresponding to the CP transmission and the UP information for session establishment.

In some implementations, the ID information corresponding to the CP transmission includes one or more of: a correlation ID corresponding to the first service, a deferred routing ID corresponding to the first service, and a session ID corresponding to the first service (the session ID can be used for a sensing service, and can also be used for a location service).

For example, the first service is the location service, and the ID information corresponding to the CP transmission may include an LCS correlation ID and/or the deferred routing ID.

For another example, the first service is the sensing service, and the ID information corresponding to the CP transmission may include a sensing session ID.

In some implementations, the UP information for session establishment may include address information for session establishment. The address information may be address information of a function associated with the first service in the core network, such as address information of the SF and/or address information of the LMF. The address information mentioned herein may include one or more of: an IP address and an FQDN.

### Embodiment 1.2: the first information may include ID information corresponding to the CP transmission, and the second information may include ID information corresponding to the UP transmission.

In some implementations, the first device may be the terminal device, and the second device may be the function for sensing or location in the core network, such as the SF or the LMF. For example, the terminal device sends the first message to the SF/LMF, and the first message carries the ID information corresponding to the CP transmission and the ID information corresponding to the UP transmission.

In some implementations, the ID information corresponding to the CP transmission includes one or more of: the correlation ID corresponding to the first service, the deferred routing ID corresponding to the first service, and the session ID corresponding to the first service (the session ID can be used for the sensing service, and can also be used for the location service).

For example, the first service is the location service, and the ID information corresponding to the CP transmission may include the LCS correlation ID and/or the deferred routing ID.

For another example, the first service is the sensing service, and the ID information corresponding to the CP transmission may include the sensing session ID.

In some implementations, the ID information corresponding to the UP transmission may include a UP session ID.

In some implementations, the first message may be a UP connection establishment request message.

In some implementations, the second device establishes an association relationship between the ID information corresponding to the CP transmission and the ID information corresponding to the UP transmission. For example, the first device is the terminal device, and the second device is the SF/LMF. The terminal device can send the first message (the UP connection establishment request message) to the SF/LMF. In addition to carrying the UP session ID in the UP connection establishment request message, the terminal device also carries the ID information corresponding to the CP transmission (such as the LCS correlation ID/deferred routing ID/session ID). In this way, the SF/LMF can determine CP connection corresponding to UP connection according to the ID information corresponding to the CP transmission, and maintain an association relationship between the UP session ID and an ID corresponding to the CP. The establishment of the association relationship helps to transmit CP data (such as data that has not been transmitted completely before) through the UP, thereby avoiding data loss.

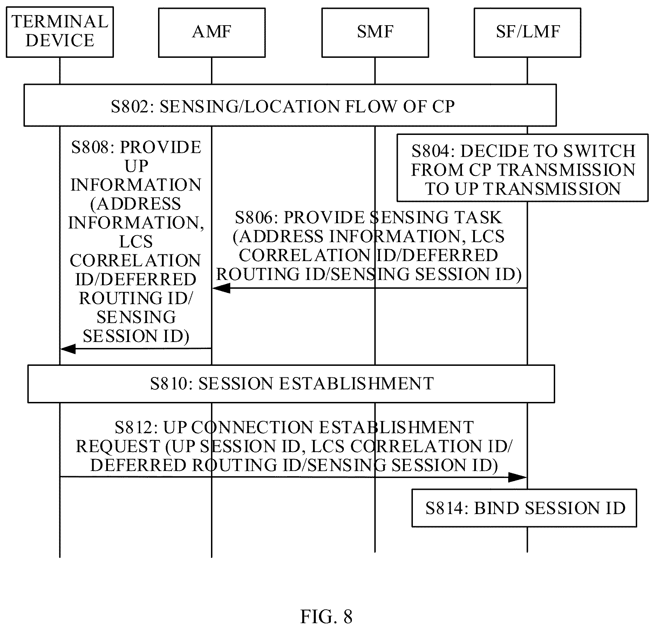

The following will describe Embodiment 1 in more detail with reference to specific examples. It can be noted that the example provided in FIG. 8 is merely intended for helping those skilled in the art understand the embodiments of the disclosure rather than limiting the embodiments of the disclosure to specific values or specific scenarios exemplified. Those skilled in the art can obviously make various equivalent modifications or variations according to the example provided in FIG. 8, and such modifications or variations also fall within the scope of the embodiments of the disclosure.

In the example illustrated in FIG. 8, when the SF/LMF decides to switch a data transmission mode from the CP transmission to the UP transmission, the SF/LMF provides the ID information corresponding to the CP transmission to the terminal device. When the terminal device requests to establish UP connection, the terminal device carries the ID information corresponding to the CP transmission. The ID information corresponding to the CP transmission can be used by the SF/LMF to associate and map the CP transmission and the UP transmission.

Step S802: with reference to the configuration and data transmission flow of the CP illustrated in FIG. 5, the terminal device establishes CP connection with the SF/LMF and performs data transmission through the CP connection.

Step S804: the SF/LMF decides to switch the subsequent data transmission to the UP transmission. For example, the SF/LMF can make the decision according to the signaling transmission load, the volume of the service data to-be-transmitted, the requirement of the sensing/location service (such as latency, accuracy), etc.

Step S806: the SF/LMF sends the N1N2 message transfer request to the AMF. The N1N2 message transfer request may carry address information of the SF/LMF. The address information may be, for example, the IP address and/or the FQDN. In addition, the N1N2 message transfer request also carries the ID information corresponding to the CP transmission, such as the LCS correlation ID/deferred routing ID/session ID (the session ID can be used for the sensing service, and can also be used for the location service), etc.

Step S808: the AMF provides the UP information (the address information of the SF/LMF) to the terminal device. Meanwhile, the message carrying the UP information also carries the ID information corresponding to the CP transmission, such as the LCS correlation ID/deferred routing ID/session ID, etc.

Step S810: after the terminal device receives the UP information, the terminal device triggers session establishment. For example, the terminal device can match a local URSP rule according to the UP information, thereby triggering the session establishment.

Step S812: after the session establishment is completed, the terminal device sends the UP connection establishment request to the SF/LMF. The connection establishment request can establish the UP connection through a protocol similar to SUPL. During the UP connection establishment, a UP protocol stack assigns the UP session ID. Meanwhile, the message also carries the ID information corresponding to the CP transmission, such as the LCS correlation ID/deferred routing ID/session ID, etc.

Step S814: the SF/LMF determines the CP connection corresponding to the UP connection according to the LCS correlation ID/deferred routing ID/session ID carried in the UP connection establishment request by the terminal device. The SF/LMF can maintain the association relationship between the UP session ID and the ID corresponding to the CP transmission, and perform subsequent UP data interaction based on the association relationship.

FIG. 8 provides a scheme for switching of data transmission of the sensing/location service from the CP transmission to the UP transmission. The scheme establishes and maintains the association relationship between the CP transmission and the UP transmission by carrying the ID information corresponding to the CP transmission during the UP connection establishment, thereby ensuring normal transmission and identification of subsequent data. With the scheme provided in FIG. 8, the sensing/location service can flexibly switch from the CP transmission to the UP transmission according to actual situations.

### Embodiment 2: Switching from UP Transmission to CP Transmission

In some implementations, a first message mentioned above may refer to a message sent by a first device to a second device during switching of service data transmission from the UP transmission to the CP transmission.

In some implementations, before performing step S710, the UP transmission or service data of the first service based on the UP transmission may be configured first. For the configuration and data transmission flow of the UP transmission, reference can be made to FIG. 6.

In some implementations, before performing step S710, the second device may first determine to switch from the UP transmission to the CP transmission. For example, the second device may determine whether to switch from the UP transmission to the CP transmission according to one or more of: signaling transmission load of the CP, the requirement of the first service (such as latency, accuracy), energy efficiency of a terminal device, and a volume of the service data to-be-transmitted.

In some implementations, first information may include ID information corresponding to the CP transmission, and second information may include ID information corresponding to the UP transmission.

In some implementations, the first device may be a function for sensing or location in a core network, such as an SF or an LMF. The second device may be a function for mobility management in the core network, such as an AMF. The SF/LMF can send the first message to the AMF, and the first message can carry the ID information corresponding to the CP transmission and the ID information corresponding to the UP transmission.

In some implementations, the first device may be the function for sensing or location in the core network, such as the SF or the LMF. The second device may be the terminal device. The SF/LMF can send the first message to the terminal device, and the first message can carry the ID information corresponding to the CP transmission and the ID information corresponding to the UP transmission. During implementation, the SF/LMF can send the first message to the terminal device through the AMF.

In some implementations, the first device may be the function for mobility management in the core network, such as the AMF. The second device may be the terminal device. The AMF can send the first message to the terminal device, and the first message can carry the ID information corresponding to the CP transmission and the ID information corresponding to the UP transmission.

In some implementations, the ID information corresponding to the CP transmission includes one or more of: a correlation ID corresponding to the first service, a deferred routing ID corresponding to the first service, and a session ID corresponding to the first service (for example, the session ID can be used for a sensing service, and can also be used for a location service).

For example, the first service is the location service, and the ID information corresponding to the CP transmission may include an LCS correlation ID and/or the deferred routing ID.

For another example, the first service is the sensing service, the ID information corresponding to the CP transmission may include a sensing session ID.

In some implementations, the ID information corresponding to the UP transmission may include a UP session ID.

In some implementations, the second device can establish an association relationship between the ID information corresponding to the CP transmission and the ID information corresponding to the UP transmission. For example, the second device is the terminal device, and the first device is a function in the core network. The second device receives a sensing/location message, which, in addition to carrying the ID information corresponding to the CP transmission (such as the LCS correlation ID/deferred routing ID/session ID), also carries the UP session ID. The terminal device can determine CP connection corresponding to UP connection according to the sensing/location message, and maintain an association relationship between the UP session ID and an ID of the CP. For example, the terminal device can map service data corresponding to subsequent UP session to the CP based on the association relationship and send the service data to the SF/LMF on the CP.

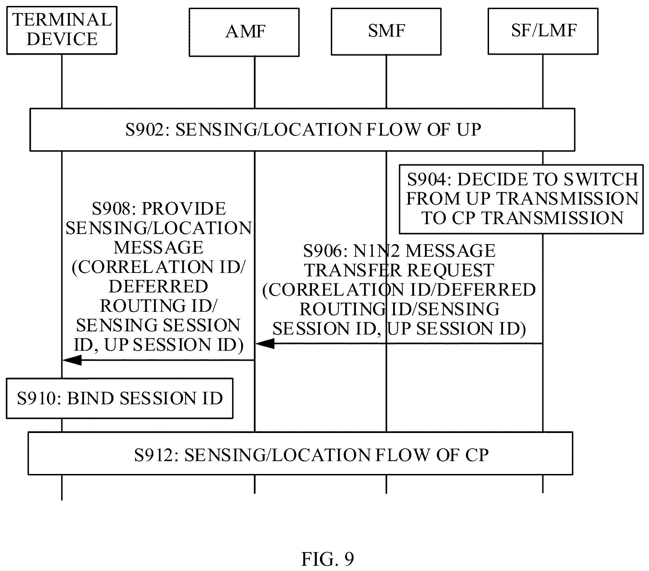

The following will describe Embodiment 2 in more detail with reference to specific examples. It can be noted that the example provided in FIG. 9 is merely intended for helping those skilled in the art understand the embodiments of the disclosure rather than limiting the embodiments of the disclosure to specific values or specific scenarios exemplified. Those skilled in the art can obviously make various equivalent modifications or variations according to the example provided in FIG. 9, and such modifications or variations also fall within the scope of the embodiments of the disclosure.

In the example illustrated in FIG. 9, when the SF/LMF decides to switch a data transmission mode from the UP transmission to the CP transmission, the SF/LMF provides the ID information corresponding to the UP transmission to the terminal device. The terminal device can map the UP session ID with the ID corresponding to the CP transmission, and transmit subsequent UP data to-be-transmitted to the SF/LMF through the CP connection according to the mapping relationship.

Step S902: with reference to the configuration and data transmission flow of the UP transmission illustrated in FIG. 6, the terminal device establishes UP connection with the SF/LMF and performs data transmission.

Step S904: the SF/LMF decides to switch from the UP transmission to the CP transmission. For example, the SF/LMF can make the decision according to the signaling transmission load, the requirement of a sensing/location service (such as latency, accuracy), the energy efficiency of a terminal device, the volume of the service data to-be-transmitted, etc.

Step S906: the SF/LMF sends an N1N2 message transfer request to the AMF. The N1N2 message transfer request carries the ID information corresponding to the CP transmission of a sensing/location session. The ID information corresponding to the CP transmission may be, for example, the correlation ID/deferred routing ID/session ID (the session ID can be used for the sensing service, and can also be used for the location service), etc. In addition, the N1N2 message transfer request also carries the ID information corresponding to the UP transmission, such as the UP session ID. The UP session ID may be allocated by a UP protocol stack. The UP protocol stack may be, for example, a LTE positioning protocol (LPP), an underlying SUPL protocol, or a new protocol that may emerge in the future.

Step S908: the AMF provides the sensing/location message to the terminal device. For example, the AMF can determine a routing ID according to the correlation ID and then provides the routing ID to the terminal device. Or, the AMF can carry information such as the deferred routing ID/session ID in a message container to send it to the terminal device. The routing ID/deferred routing ID/session ID is the ID information corresponding to the CP transmission used by the terminal device. That is to say, if the terminal device has a subsequent need to send service data of the sensing/location service to the LMF/SF through the CP, the terminal device can use the ID information to determine a corresponding LMF/SF and a corresponding sensing/location session. In addition, the sensing/location message sent in step S908 also carries the ID information corresponding to the UP transmission, such as the UP session ID.

Step S910: the terminal device can establish and maintain an association relationship between the LCS correlation ID/deferred routing ID/session ID and the UP session ID (that is, bind the two together), and perform subsequent CP transmission based on the association relationship. For example, the terminal device can map data corresponding to the UP session ID to the CP, thereby transmitting the data to the SF/LMF through the CP.

Step S912: the terminal device and the SF/LMF execute a sensing/location flow of the CP and transmit sensing/location data through the CP.

FIG. 9 provides a scheme for switching data transmission of the sensing/location service from the UP transmission to the CP transmission. The scheme establishes and maintains the association relationship between the CP transmission and the UP transmission by carrying the ID information corresponding to the UP transmission during the CP connection establishment, thereby ensuring normal transmission and identification of subsequent data. With the scheme provided in FIG. 9, the sensing/location service can flexibly switch from the UP transmission to the CP transmission according to actual conditions.

### Embodiment 3: Configuring Both UP transmission and CP transmission

In Embodiment 3, a first message mentioned above may refer to a message sent by a first device to a second device during configuring the UP transmission and the CP transmission.

In Embodiment 3, before performing step S710, the second device may first determine whether to configure both the UP transmission and the CP transmission (or whether to perform dual configuration for the UP transmission and the CP transmission). For example, the second device may determine whether to configure both the UP transmission and the CP transmission according to one or more of: signaling transmission load of the CP, a requirement of the first service (such as latency, accuracy), energy efficiency of a terminal device, a service requirement of the first service, and the volume of the service data to-be-transmitted.

### Example 3.1: the first information includes ID information corresponding to the CP transmission, and the second information includes UP information for session establishment.

In some implementations, the first device may be a function for sensing or location in a core network, such as an SF or an LMF. The second device may be a function for mobility management in the core network, such as an AMF. The SF/LMF can send the first message to the AMF, and the first message can carry the ID information corresponding to the CP transmission and the UP information for session establishment.

In some implementations, the first device may be the function for sensing or location in the core network, such as the SF or the LMF. The second device may be the terminal device. The SF/LMF can send the first message to the terminal device, and the first message can carry the ID information corresponding to the CP transmission and the UP information for session establishment. During implementation, the SF/LMF can send the first message to the terminal device through the AMF.

In some implementations, the first device may be the function for mobility management in the core network, such as the AMF. The second device may be the terminal device. The AMF can send the first message to the terminal device, and the first message can carry the ID information corresponding to the CP transmission and the UP information for session establishment.

In some implementations, the ID information corresponding to the CP transmission includes one or more of: a correlation ID corresponding to the first service, a deferred routing ID corresponding to the first service, and a session ID corresponding to the first service (the session ID can be used for a sensing service, and can also be used for a location service).

For example, the first service is the location service, and the ID information corresponding to the CP transmission may include an LCS correlation ID and/or the deferred routing ID.

For another example, the first service is the sensing service, and the ID information corresponding to the CP transmission may include a sensing session ID.

In some implementations, the UP information for session establishment may include address information for session establishment. The address information may be address information of a function associated with the first service in the core network, such as address information of the SF and/or address information of the LMF. The address information mentioned herein may include one or more of: an IP address and an FQDN.

In some implementations, the first message may also include third information. The third information indicates one or more of: the first service supports switching between the CP transmission and the UP transmission, and a condition for switching between the CP transmission and the UP transmission. Furthermore, in some implementations, after receiving the third information, the second device can determine to use the CP transmission and/or the UP transmission according to the condition for switching indicated by the third information.

In some implementations, the condition for switching between the CP transmission and the UP transmission may be associated with one or more of: the service requirement of the first service, and a transmission status of a current transmission path. The current transmission path mentioned herein refers to a transmission path corresponding to the UP transmission or a transmission path corresponding to the CP transmission.

In some implementations, the condition for switching is associated with one or more of: a service data volume of the first service, a congestion status of the current transmission path, a transmission latency requirement of the first service, and a power consumption requirement of a terminal device transmitting the first service.

For example, if the service data volume of the first service is greater than or equal to a first threshold, the UP transmission is used for service data transmission of the first service.

For another example, if the service data volume of the first service is less than the first threshold, the CP transmission is used for the service data transmission of the first service.

For another example, if congestion occurs in the current transmission path, another transmission path is used for the service data transmission of the first service.

For another example, if the first service has a high transmission latency requirement (such as higher than or equal to a second threshold), the UP transmission is used for the service data transmission of the first service.

For another example, if the first service has a low transmission latency requirement (such as lower than the second threshold), the CP transmission is used for the service data transmission of the first service.

For another example, if the first service has a low power consumption requirement for the terminal device (such as lower than a third threshold), the CP transmission is used for the service data transmission of the first service.

For another example, if the terminal device detects that a received power of a certain signal exceeds a fourth threshold, the UP transmission is used for the service data transmission of the first service. The signal can be, for example, a measurement signal sent during location or sensing. For instance, during location, when it is uncertain whether there is a target device to-be-located around the terminal device, the CP transmission can first be used for the service data transmission of the first service, and the measurement signal can be used for detecting whether there is a target device around the terminal device. When the received power of the measurement signal exceeds the fourth threshold (which indicates that there is a target device around the terminal device), it indicates that a large amount of location-related data will be transmitted next. At this time, the service data transmission of the first service can be switched to the UP transmission.

For another example, if the terminal device determines that there is no need to report service data of the first service within a period of time, the transmission can be switched from the UP transmission to the CP transmission.

### Example 3.2: the first information includes the ID information corresponding to the CP transmission, and the second information includes ID information corresponding to the UP transmission.

In some implementations, the first device is the terminal device, the second device is the function for sensing or location in the core network, such as the SF or the LMF. For example, the terminal device can send the first message to the SF/LMF, and the first message carries the ID information corresponding to the CP transmission and the ID information corresponding to the UP transmission.

In some implementations, the ID information corresponding to the CP transmission includes one or more of: the correlation ID corresponding to the first service, the deferred routing ID corresponding to the first service, and the session ID corresponding to the first service (the session ID can be used for the sensing service, and also be used for the location service).

For example, the first service is the location service, and the ID information corresponding to the CP transmission may include the LCS correlation ID and/or the deferred routing ID.

For another example, the first service is the sensing service, and the ID information corresponding to the CP transmission may include the sensing session ID.

In some implementations, the ID information corresponding to the UP transmission may include a UP session ID.

In some implementations, after receiving the first message, the second device can establish an association relationship between the ID information corresponding to the CP transmission and the ID information corresponding to the UP transmission. For example, the first device is the terminal device, and the second device is the SF/LMF. The terminal device can send the first message (a UP connection establishment request message) to the SF/LMF. In addition to carrying the UP session ID in the UP connection establishment request message, the terminal device also carries the ID corresponding to the CP transmission (such as the LCS correlation ID/deferred routing ID/session ID). In this way, the SF/LMF can determine CP connection corresponding to UP connection according to the ID corresponding to the CP transmission, and maintain an association relationship between the UP session ID and an ID of the CP. The establishment of the association relationship helps to transmit CP data (such as data that has not been transmitted completely before) through the UP, thereby avoiding data loss.

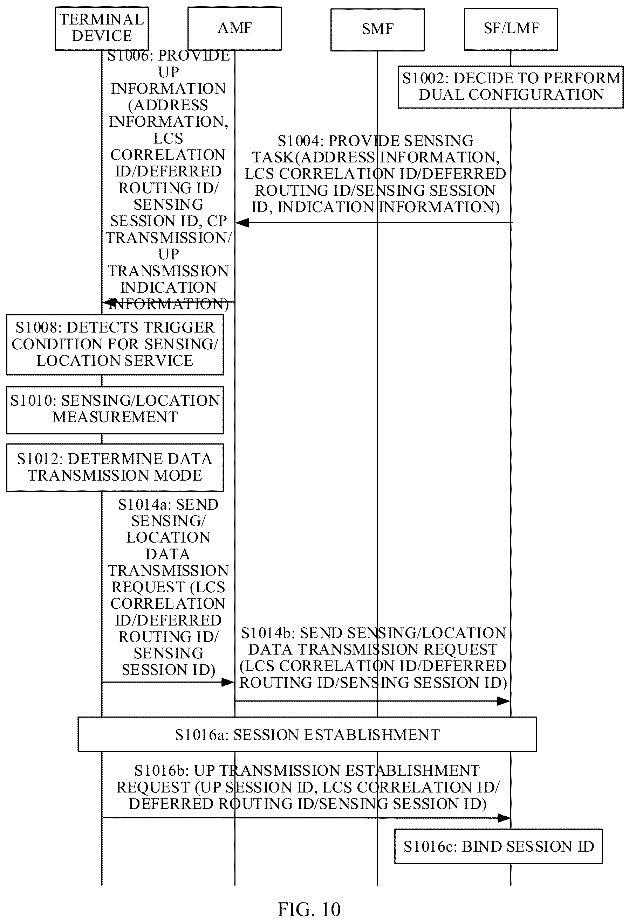

The following will describe Embodiment 3 in more detail with reference to specific examples. It can be noted that the example provided in FIG. 10 is merely intended for helping those skilled in the art understand the embodiments of the disclosure rather than limiting the embodiments of the disclosure to specific values or specific scenarios exemplified. Those skilled in the art can obviously make various equivalent modifications or variations according to the example provided in FIG. 10, and such modifications or variations also fall within the scope of the embodiments of the disclosure.

A configuration flow of transmission connection illustrated in FIG. 10 configures both the UP transmission and the CP transmission of a sensing/location service. During configuration, both the ID information corresponding to the CP transmission and address information of the UP are carried. After the UP transmission and the CP transmission are configured, the terminal device can independently decide to use the CP transmission or the UP transmission to transmit sensing/location data according to actual transmission situations.

Step S1002: the SF/LMF decides to perform dual configuration, that is, to configure both the UP transmission and the CP transmission of the sensing/location service. For example, the SF/LMF can make the decision according to the signaling transmission load, the requirement of the sensing/location service (such as latency, accuracy), the energy efficiency of the terminal device, the volume of the service data to-be-transmitted, etc. Or, the SF/LMF can also make the decision according to the service type and/or the service requirement of the sensing/location service.

Step S1004: the SF/LMF sends an N1N2 message transfer request to the AMF. The N1N2 message transfer request carries address information of the SF/LMF, such as the IP address or the FQDN. At the same time, the N1N2 message transfer request also carries the ID information corresponding to the CP transmission, such as the LCS correlation ID/deferred routing ID/session ID (the session ID can be used for the sensing service, and can also be used for the location service), etc. In addition, the N1N2 message transfer request can also carry indication information (which corresponds to the third information mentioned above). The indication information indicates that the sensing/location service supports switching between the UP transmission and the CP transmission. Furthermore, the indication information can also indicate the condition for switching between the UP transmission and the CP transmission at the same time. For example, when the terminal device detects that a certain condition for switching is met, the terminal device can switch from the CP transmission to the UP transmission. Exemplarily, if the data volume of the location/sensing service exceeds a certain threshold, or a received power of a sensing/location measurement signal is detected to exceed a certain threshold, the terminal device can switch to the UP transmission. Or, if the terminal device detects that there is no need to report sensing/location data in a period of time, the terminal device can switch to the CP transmission.

Step S1006: the AMF provides the UP information (the address information of the SF/LMF) to the terminal device. At the same time, the message carrying the UP information can also carry the ID information corresponding to the CP transmission, such as the LCS correlation ID/deferred routing ID/session ID, etc. In addition, the message carrying the UP information also carries the indication information mentioned above.

Step S1008: the terminal device detects a trigger condition for the sensing/location service according to configuration information sent by the SF/LMF.

Step S1010: the terminal device measures a sensing/location signal.

Step S1012: the terminal device selects a data transmission mode according to the indication information sent by the SF/LMF.

Step S1014a: after the terminal device performs the measurement, the terminal device sends a sensing/location data transmission request to the AMF. The sensing/location data transmission request includes a routing ID/deferred routing ID/session ID.

Step S1014b: after the AMF receives the sensing/location data transmission request, the AMF can determine the SF/LMF and a correlation ID to-be-used, according to the routing ID/deferred routing ID/session ID and a previously locally-stored mapping relationship. Then, the AMF sends the sensing/location data to the SF/LMF.

Step S1016a: after the terminal device receives the UP information, the terminal device triggers session establishment. For example, the terminal device can match a local URSP rule according to the UP information, thereby triggering the session establishment.

Step S1016b: after the session establishment is completed, the terminal device sends the UP connection establishment request to the SF/LMF through the UP. For example, the terminal device can establish the UP connection through a protocol similar to SUPL. During the UP connection establishment, a UP protocol stack assigns the UP session ID. Meanwhile, the UP connection establishment request also carries the ID information corresponding to the CP transmission, such as the LCS correlation ID/deferred routing ID/session ID.

Step S1016c: the SF/LMF determines the CP connection corresponding to the UP connection according to the LCS correlation ID/deferred routing ID/session ID sent by the terminal device through the UP. The SF/LMF can maintain an association relationship between the UP session ID and the ID information corresponding to the CP transmission (that is, bind the UP session ID with the ID information corresponding to the CP transmission), and perform subsequent UP data transmission according to the association relationship.

The scheme illustrated in FIG. 10 carries both the ID information corresponding to the CP transmission and the address information of the UP during configuring the transmission connection. This allows the terminal device to independently decide to use the CP or the UP for data transmission in subsequent interactions, thus making the transmission of sensing/location data more flexible.

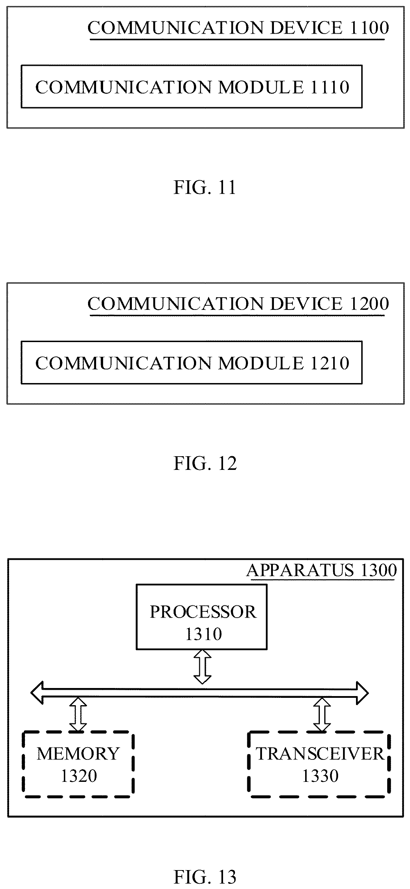

The above describes the method embodiments of the disclosure in detail with reference to FIG. 1 to FIG. 10. The following will describe the apparatus embodiments of the disclosure in detail with reference to FIG. 11 to FIG. 13. It can be understood that the description of the method embodiments corresponds to the description of the device embodiments. Therefore, for the parts not described in detail, reference can be made to the previous method embodiments.

FIG. 11 is a schematic structural diagram of a communication device provided by an embodiment of the disclosure. The communication device 1100 illustrated in FIG. 11 may be a first device mentioned in any one of the previous embodiments. The first device may include a communication module 1110. The communication module 1110 is configured to send a first message to a second device. The first message is used to configure CP transmission and/or UP transmission. Both the CP transmission and the UP transmission are used for service data transmission of a first service. The first message includes first information and second information. The first information corresponds to the CP transmission. The second information corresponds to the UP transmission.

In some implementations, the communication module 1110 is configured to send the first message to the second device during switching of the service data transmission from the CP transmission to the UP transmission.

In some implementations, the first information includes ID information corresponding to the CP transmission. The second information includes UP information for session establishment.

In some implementations, the first device is a function for sensing or location in a core network, and the second device is a function for mobility management in the core network. Or, the first device is the function for sensing or location in the core network, and the second device is a terminal device. Or, the first device is the function for mobility management in the core network, and the second device is the terminal device.

In some implementations, the first information includes the ID information corresponding to the CP transmission. The second information includes ID information corresponding to the UP transmission.

In some implementations, the first device is the terminal device. The second device is the function for sensing or location in the core network.

In some implementations, the communication module 1110 is configured to send the first message to the second device during switching of the service data transmission from the UP transmission to the CP transmission.

In some implementations, the first information includes the ID information corresponding to the CP transmission. The second information includes the ID information corresponding to the UP transmission.

In some implementations, the first device is the function for sensing or location in the core network, the second device is the function for mobility management in the core network. Or, the first device is the function for sensing or location in the core network, and the second device is the terminal device. Or, the first device is the function for mobility management in the core network, and the second device is the terminal device.

In some implementations, the communication module 1110 is configured to send the first message to the second device during configuring the UP transmission and the CP transmission.

In some implementations, the first information includes the ID information corresponding to the CP transmission. The second information includes the UP information for session establishment.

In some implementations, the first device is the function for sensing or location in the core network, and the second device is the function for mobility management in the core network. Or, the first device is the function for mobility management in the core network, and the second device is the terminal device.

In some implementations, the first message further includes third information. The third information is used to indicate one or more of: the first service supports switching between the CP transmission and the UP transmission is supported by the first service, and a condition for switching between the CP transmission and the UP transmission.

In some implementations, the condition for switching is associated with one or more of: a service requirement of the first service, and a transmission status of a current transmission path. The current transmission path is a transmission path corresponding to the UP transmission or a transmission path corresponding to the CP transmission.

In some implementations, the condition for switching is associated with one or more of: a service data volume of the first service, a congestion status of the current transmission path, a transmission latency requirement of the first service, and a power consumption requirement of a terminal device transmitting the first service.

In some implementations, the first information includes the ID information corresponding to the CP transmission. The second information includes the ID information corresponding to the UP transmission.

In some implementations, the first device is the terminal device. The second device is the function for sensing or location in the core network.

In some implementations, the ID information corresponding to the CP transmission includes one or more of: a correlation ID corresponding to the first service, a deferred routing ID corresponding to the first service, and a session ID corresponding to the first service.

In some implementations, the UP information includes address information of the first device.

In some implementations, the ID information corresponding to the UP transmission includes a UP session ID.

In some implementations, the first service is a location service or a sensing service.

FIG. 12 is a schematic structural diagram of a communication device provided by another embodiment of the disclosure. The communication device 1200 illustrated in FIG. 12 may be a second device mentioned in any one of the previous embodiments. the second device includes a communication module 1210. The communication module 1210 is configured to receive a first message sent by a first device. The first message is used to configure CP transmission and/or UP transmission. Both the CP transmission and the UP transmission are used for service data transmission of a first service. The first message includes first information and second information. The first information corresponds to the CP transmission, and the second information corresponds to the UP transmission.

In some implementations, the communication module 12210 is configured to receive the first message sent by the first device during switching of the service data transmission from the CP transmission to the UP transmission.

In some implementations, the first information includes ID information corresponding to the CP transmission. The second information includes UP information for session establishment.

In some implementations, the first device is a function for sensing or location in a core network, and the second device is a function for mobility management in the core network. Or, the first device is the function for sensing or location in the core network, and the second device is a terminal device. Or, the first device is the function for mobility management in the core network, and the second device is the terminal device.

In some implementations, the first information includes the ID information corresponding to the CP transmission. The second information includes ID information corresponding to the UP transmission.

In some implementations, the first device is the terminal device. The second device is the function for sensing or location in the core network.

In some implementations, the communication device 1200 further includes a first establishing module. The first establishing module is configured to establish an association relationship between the ID information corresponding to the CP transmission and the ID information corresponding to the UP transmission.

In some implementations, the communication module 1210 is configured to receive the first message sent by the first device during switching of the service data transmission from the UP transmission to the CP transmission.

In some implementations, the first information includes the ID information corresponding to the CP transmission. The second information includes the ID information corresponding to the UP transmission.

In some implementations, the first device is the function for sensing or location in the core network, and the second device is the function for mobility management in the core network. Or, the first device is the function for sensing or location in the core network, and the second device is the terminal device. Or, the first device is the function for mobility management in the core network, and the second device is the terminal device.

In some implementations, the communication device 1200 further includes a second establishing module. The second establishing module is configured to establish the association relationship between the ID information corresponding to the CP transmission and the ID information corresponding to the UP transmission.

In some implementations, the communication module 1210 is configured to receive the first message sent by the first device during configuring the UP transmission and the CP transmission.

In some implementations, the first information includes the ID information corresponding to the CP transmission. The second information includes the UP information for session establishment.

In some implementations, the first device is the function for sensing or location in the core network, and the second device is the function for mobility management in the core network. Or, the first device is the function for mobility management in the core network, and the second device is the terminal device.

In some implementations, the first message further includes third information. The third information is used to indicate one or more of: the first service supports switching between the CP transmission and the UP transmission is supported by the first service, and a condition for switching between the CP transmission and the UP transmission.

In some implementations, the condition for switching is associated with one or more of: a service requirement of the first service, and a transmission status of a current transmission path. The current transmission path is a transmission path corresponding to UP transmission or a transmission path corresponding to CP transmission.

In some implementations, the condition for switching is associated with one or more of: a service data volume of the first service, a congestion status of the current transmission path, a transmission latency requirement of the first service, and a power consumption requirement of a terminal device transmitting the first service.

In some implementations, the communication device 1200 further includes a determining module. The determining module is configured to determine to use the CP transmission and/or the UP transmission according to the third information.

In some implementations, the first information includes the ID information corresponding to the CP transmission. The second information includes the ID information corresponding to the UP transmission.

In some implementations, the first device is the terminal device. The second device is the function for sensing or location in the core network.

In some implementations, the communication device 1200 further includes a third establishing module. The third establishing module is configured to establish the association relationship between the ID information corresponding to the CP transmission and the ID information corresponding to the UP transmission.

In some implementations, the ID information corresponding to the CP transmission includes one or more of: a correlation ID corresponding to the first service, a deferred routing ID corresponding to the first service, and a session ID corresponding to the first service.

In some implementations, the UP information includes address information of the first device.

In some implementations, the ID information corresponding to the UP transmission includes a UP session ID.

In some implementations, the first service is a location service or a sensing service.

FIG. 13 is a schematic structural diagram of an apparatus in embodiments of the disclosure. The dashed lines illustrated in FIG. 13 indicate that the unit or module is optional. The apparatus 1300 can be used to perform the method described in the aforementioned method embodiments. The apparatus 1300 may be a chip, a terminal device, or a network device.

The apparatus 1300 may include one or more processors 1310. The processor 1310 can support the apparatus 1300 to perform the methods described in the aforementioned method embodiments. The processor 1310 may be a general-purpose processor or a dedicated processor. For example, the processor may be a central processing unit (CPU). Or, the processor may be other general-purpose processors, a digital signal processor (DSP), an application specific integrated circuit (ASIC), a field programmable gate array (FPGA), or other programmable logic devices, discrete gate or transistor logic devices, discrete hardware components, etc. A general-purpose processor may be a microprocessor, or the processor may be any conventional processor, etc.

The apparatus 1300 may further include one or more memories 1320. A computer program is stored in the memory 1320. The program can be executed by the processor 1310, to cause the processor 1310 to perform the methods described in the aforementioned method embodiments. The memory 1320 may be independent of the processor 1310, or may be integrated into the processor 1310.

The apparatus 1300 may further include a transceiver 1330. The processor 1310 can communicate with other devices or chips through the transceiver 1330. For example, the processor 1310 can send and receive data with other devices or chips via the transceiver 1330.

A computer-readable storage medium is further provided in embodiments of the disclosure. The computer-readable storage medium is configured to store computer programs. The computer-readable storage medium can be applied to the communication device provided in embodiments of the disclosure. The computer programs are operable with a computer to perform the methods implemented by the communication device in each embodiment of the disclosure.

A computer program product is further provided in embodiments of the disclosure. The computer program product includes computer programs. The computer program product can be applied to the communication device provided in embodiments of the disclosure. The computer programs are operable with the computer to perform the methods implemented by the communication device in each embodiment of the disclosure.

A computer program is further provided in embodiments of the disclosure. The computer program can be applied to the communication device provided in embodiments of the disclosure. The computer program is operable with the computer to perform the methods implemented by the communication device in each embodiment of the disclosure.

It can be understood that, the terms "system" and "network" herein can be used interchangeably throughout the disclosure. In addition, terms used in the disclosure are merely intended for explaining embodiments of the disclosure rather than limiting the disclosure. The terms "first", "second", "third", "fourth", and the like used in the specification, the claims, and the accompany drawings of the disclosure are used for distinguishing different objects rather than describing a particular order. In addition, the terms "include", "comprise", and "have" as well as variations thereof are intended to cover non-exclusive inclusion.

In embodiments of the disclosure, the referred "indication" may be a direct indication, may be an indirect indication, or may mean that there is an association relationship. For example, *A* indicates *B* may mean that *A* directly indicates *B,* for instance, *B* can be obtained according to *A;* may mean that *A* indirectly indicates *B,* for instance, A indicates C, and *B* can be obtained according to C; or may mean that that there is an association relationship between *A* and *B.*

In embodiments of the disclosure, *"B* corresponding to *A"* indicates that *B* is associated with *A,* and *B* may be determined according to *A.* However, it can be further understood that, "determine *B* according to *A"* does not mean that *B* is determined according to *A* only, and *B* may also be determined according to *A* and/or other information.

In embodiments of the disclosure, the term "correspondence" may mean that there is a direct or indirect correspondence between the two, may mean that there is an association between the two, or may mean a relationship of indicating and indicated or configuring and configured, etc.

In embodiments of the disclosure, the "pre-defined" or "pre-configured" can be implemented by pre-saving a corresponding code or table in a device (for example, including the terminal device and the network device) or in other manners that can be used for indicating related information, and the disclosure is not limited in this regard. For example, the "pre-defined" may mean defined in a protocol.

In embodiments of the disclosure, the "protocol" may refer to a communication standard protocol, which may include, for example, an LTE protocol, an NR protocol, and a protocol applied to a future communication system, and the disclosure is not limited in this regard.

The term "and/or" herein merely describes an association relationship between associated objects, which means that there can be three relationships. For example, *A* and/or *B* can mean *A* alone, both *A* and *B* exist, and *B* alone. In addition, the character "/" herein generally indicates that the associated objects are in an "or" relationship.

In various embodiments of the disclosure, the magnitude of a sequence number of each of the aforementioned processes does not imply an execution order, and the execution order between the processes should be determined according to function and internal logic thereof, which shall not constitute any limitation to the implementation of embodiments of the disclosure.

It can be understood that, the systems, devices and methods disclosed in several embodiments provided in the disclosure may be implemented in various other manners. For example, the above apparatus implementations are merely illustrative, e.g., the division of units is only a division of logical functions, and other manners of division may be available in practice, e.g., multiple modules may be combined or may be integrated into another system, or some features may be ignored or skipped. In other respects, the coupling or direct coupling or communication connection as illustrated or discussed may be an indirect coupling or communication connection through some interface or module, and may be electrical, mechanical, or otherwise.

Units illustrated as separated components may or may not be physically separated. Components displayed as units may or may not be physical units, and may reside at one location or may be distributed to multiple networked units. Some or all of the units may be selectively adopted according to practical needs to achieve desired objectives of the solutions of embodiments.

In addition, various functional units described in various embodiments of the disclosure may be integrated into one processing unit or may be present as a number of physically separated units, and two or more units may be integrated into one.

All or some of the aforementioned embodiments can be implemented through software, hardware, firmware, or any other combination thereof. When implemented by software, all or some of the aforementioned embodiments can be implemented in the form of a computer program product. The computer program product includes one or more computer instructions. When the computer instructions are applied and executed on a computer, all or some of the operations or functions of the embodiments of the disclosure are performed. The computer can be a general-purpose computer, a dedicated computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The aforementioned are merely implementations of the disclosure, but are not intended to limit the protection scope of the disclosure. Any variation or replacement easily thought of by those skilled in the art within the technical scope disclosed in the disclosure shall belong to the protection scope of the disclosure. Therefore, the protection scope of the disclosure shall be subject to the protection scope of the claims.

## Claims

1. A data transmission method, comprising:
sending, by a first device, a first message to a second device, wherein the first message is used to configure control plane (CP) transmission and/or user plane (UP) transmission, and both the CP transmission and the UP transmission are used for service data transmission of a first service;
wherein the first message comprises first information and second information, the first information corresponds to the CP transmission, and the second information corresponds to the UP transmission.

2. The method of claim 1, wherein sending, by the first device, the first message to the second device, comprises:
sending, by the first device, the first message to the second device during switching of the service data transmission from the CP transmission to the UP transmission.

3. The method of claim 2, wherein the first information comprises identity (ID) information corresponding to the CP transmission, and the second information comprises UP information for session establishment.

4. The method of claim 3, wherein:
the first device is a function for sensing or location in a core network, and the second device is a function for mobility management in the core network; or
the first device is the function for sensing or location in the core network, and the second device is a terminal device; or
the first device is the function for mobility management in the core network, and the second device is the terminal device.

5. The method of claim 2, wherein the first information comprises ID information corresponding to the CP transmission, and the second information comprises ID information corresponding to the UP transmission.

6. The method of claim 5, wherein the first device is a terminal device, and the second device is a function for sensing or location in a core network.

7. The method of claim 1, wherein sending, by the first device, the first message to the second device, comprises:
sending, by the first device, the first message to the second device during switching of the service data transmission from the UP transmission to the CP transmission.

8. The method of claim 7, wherein the first information comprises ID information corresponding to the CP transmission, and the second information comprises ID information corresponding to the UP transmission.

9. The method of claim 8, wherein:
the first device is a function for sensing or location in a core network, and the second device is a function for mobility management in the core network; or
the first device is the function for sensing or location in the core network, and the second device is a terminal device; or
the first device is the function for mobility management in the core network, and the second device is the terminal device.

10. The method of claim 1, wherein sending, by the first device, the first message to the second device, comprises:
sending, by the first device, the first message to the second device during configuring the UP transmission and the CP transmission.

11. The method of claim 10, wherein the first information comprises ID information corresponding to the CP transmission, and the second information comprises UP information for session establishment.

12. The method of claim 11, wherein:
the first device is a function for sensing or location in a core network, and the second device is a function for mobility management in the core network; or
the first device is the function for mobility management in the core network, and the second device is a terminal device.

13. The method of claim 11 or 12, wherein the first message further comprises third information, and the third information is used to indicate one or more of:
the first service supports switching between the CP transmission and the CP transmission; and
a condition for switching between the CP transmission and the UP transmission.

14. The method of claim 13, wherein the condition for switching is associated with one or more of:
a service requirement of the first service; and
a transmission status of a current transmission path;
wherein the current transmission path is a transmission path corresponding to the UP transmission or a transmission path corresponding to the CP transmission.

15. The method of claim 14, wherein the condition for switching is associated with one or more of:
a service data volume of the first service;
a congestion status of the current transmission path;
a transmission latency requirement of the first service; and
a power consumption requirement of a terminal device transmitting the first service.

16. The method of claim 10, wherein the first information comprises ID information corresponding to the CP transmission, and the second information comprises ID information corresponding to the UP transmission.

17. The method of claim 16, wherein the first device is a terminal device, and the second device is a function for sensing or location in a core network for sensing or location.

18. The method of any one of claims 3 to 6, 8 to 9, and 11 to 17, wherein the ID information corresponding to the CP transmission comprises one or more of:
a correlation ID corresponding to the first service;
a deferred routing ID corresponding to the first service; and
a session ID corresponding to the first service.

19. The method of any one of claims 3 to 4 and 10 to 15, wherein the UP information comprises address information of the first device.

20. The method of any one of claims 5 to 6, 8 to 9 and 16 to 17, wherein the ID information corresponding to the UP transmission comprises a UP session ID.

21. The method of any one of claims 1 to 20, wherein the first service is a location service or a sensing service.

22. A data transmission method, comprising:
receiving, by a second device, a first message sent by a first device, wherein the first message is used to configure control plane (CP) transmission and/or user plane (UP) transmission, and both the CP transmission and the UP transmission are used for service data transmission of a first service;
wherein the first message comprises first information and second information, the first information corresponds to the CP transmission, and the second information corresponds to the UP transmission.

23. The method of claim 22, wherein receiving, by the second device, the first message sent by the first device, comprises:
receiving, by the second device, the first message sent by the first device during switching of the service data transmission from the CP transmission to the UP transmission.

24. The method of claim 23, wherein the first information comprises identity (ID) information corresponding to the CP transmission, and the second information comprises UP information for session establishment.

25. The method of claim 24, wherein:
the first device is a function for sensing or location in a core network, and the second device is a function for mobility management in the core network; or
the first device is the function for sensing or location in the core network, and the second device is a terminal device; or
the first device is the function for mobility management in the core network, and the second device is the terminal device.

26. The method of claim 23, wherein the first information comprises ID information corresponding to the CP transmission, and the second information comprises ID information corresponding to the UP transmission.

27. The method of claim 26, wherein the first device is the terminal device, and the second device is the function for sensing or location in the core network.

28. The method of claim 26 or 27, further comprising:
establishing, by the second device, an association relationship between the ID information corresponding to the CP transmission and the ID information corresponding to the UP transmission.

29. The method of claim 22, wherein receiving, by the second device, the first message sent by the first device, comprise:
receiving, by the second device, the first message sent by the first device during switching of the service data transmission from the UP transmission to the CP transmission.

30. The method of claim 29, wherein the first information comprises ID information corresponding to the CP transmission, and the second information comprises ID information corresponding to the UP transmission.

31. The method of claim 30, wherein:
the first device is a function for sensing or location in a core network, and the second device is a function for mobility management in the core network; or
the first device is the function for sensing or location in the core network, and the second device is a terminal device; or
the first device is the function for mobility management in the core network, and the second device is the terminal device.

32. The method of claim 30 or 31, further comprising:
establishing, by the second device, an association relationship between the ID information corresponding to the CP transmission and the ID information corresponding to the UP transmission.

33. The method of claim 22, wherein receiving, by the second device, the first message sent by the first device, comprises:
receiving, by the second device, the first message sent by the first device during configuring the UP transmission and the CP transmission.

34. The method of claim 33, wherein the first information comprises ID information corresponding to the CP transmission, and the second information comprises UP information for session establishment.

35. The method of claim 34, wherein:
the first device is a function for sensing or location in a core network, and the second device is a function for mobility management in the core network; or
the first device is the function for mobility management in the core network, and the second device is a terminal device.

36. The method of claim 34 or 35, wherein the first message further comprises third information, and the third information is used to indicate one or more of:
the first service supports switching between the CP transmission and the UP transmission; and
a condition for switching between the CP transmission and the UP transmission.

37. The method of claim 36, wherein the condition for switching is associated with one or more of:
a service requirement of the first service; and
a transmission status of a current transmission path;
wherein the current transmission path is a transmission path corresponding to the UP transmission or a transmission path corresponding to the CP transmission.

38. The method of claim 37, wherein the condition for switching is associated with one or more of:
a service data volume of the first service;
a congestion status of the current transmission path;
a transmission latency requirement of the first service; and
a power consumption requirement of a terminal device transmitting the first service.

39. The method of any one of claims 36 to 38, further comprising:
determining, by the second device, to use the CP transmission and/or the UP transmission according to the third information.

40. The method of claim 33, wherein the first information comprises ID information corresponding to the CP transmission, and the second information comprises ID information corresponding to the UP transmission.

41. The method of claim 40, wherein the first device is a terminal device, and the second device is a function for sensing or location in a core network.

42. The method of claim 40 or 41, further comprising:
establishing, by the second device, an association relationship between the ID information corresponding to the CP transmission and the ID information corresponding to the UP transmission.

43. The method of any one of claims 24 to 28, 30 to 32, and 34 to 42, wherein the ID information corresponding to the CP transmission comprises one or more of:
a correlation ID corresponding to the first service;
a deferred routing ID corresponding to the first service; and
a session ID corresponding to the first service.

44. The method of any one of claims 24 to 25 and 34 to 39, wherein the UP information comprises address information of the first device.

45. The method of any one of claims 26 to 28, 30 to 32, and 40 to 42, wherein the ID information corresponding to the UP transmission comprises a UP session ID.

46. The method of any one of claims 22 to 45, wherein the first service is a location service or a sensing service.

47. A communication device, wherein the communication device is a first device, and the first device comprises:
a communication module configured to send a first message to a second device, wherein the first message is used to configure control plane (CP) transmission and/or user plane (UP) transmission, and both the CP transmission and the UP transmission are used for service data transmission of a first service;
wherein the first message comprises first information and second information, the first information corresponds to the CP transmission, and the second information corresponds to the UP transmission.

48. The communication device of claim 47, wherein the communication module is configured to send the first message to the second device during switching of the service data transmission from the CP transmission to the UP transmission.

49. The communication device of claim 48, wherein the first information comprises identity (ID) information corresponding to the CP transmission, and the second information comprises UP information for session establishment.

50. The communication device of claim 49, wherein:
the first device is a function for sensing or location in a core network, and the second device is a function for mobility management in the core network; or
the first device is the function for sensing or location in the core network, and the second device is a terminal device; or
the first device is the function for mobility management in the core network, and the second device is the terminal device.

51. The communication device of claim 48, wherein the first information comprises ID information corresponding to the CP transmission, and the second information comprises ID information corresponding to the UP transmission.

52. The communication device of claim 51, wherein the first device is a terminal device, and the second device is a function for sensing or location in a core network.

53. The communication device of claim 47, wherein the communication module is configured to send the first message to the second device during switching of the service data transmission from the UP transmission to the CP transmission.

54. The communication device of claim 53, wherein the first information comprises ID information corresponding to the CP transmission, and the second information comprises ID information corresponding to the UP transmission.

55. The communication device of claim 54, wherein:
the first device is a function for sensing or location in a core network, and the second device is a function for mobility management in the core network; or
the first device is the function for sensing or location in the core network, and the second device is a terminal device; or
the first device is the function for mobility management in the core network, and the second device is the terminal device.

56. The communication device of claim 47, wherein the communication module is configured to send the first message to the second device during configuring the UP transmission and the CP transmission.

57. The communication device of claim 56, wherein the first information comprises ID information corresponding to the CP transmission, and the second information comprises UP information for session establishment.

58. The communication device of claim 57, wherein:
the first device is a function for sensing or location in a core network, and the second device is a function for mobility management in the core network; or
the first device is the function for mobility management in the core network, and the second device is a terminal device.

59. The communication device of claim 57 or 58, wherein the first message further comprises third information, and the third information is used to indicate one or more of:
the first service supports switching between the CP transmission and the UP transmission; and
a condition for switching between the CP transmission and the UP transmission.

60. The communication device of claim 59, wherein the condition for switching is associated with one or more of:
a service requirement of the first service; and
a transmission status of a current transmission path;
wherein the current transmission path is a transmission path corresponding to the UP transmission or a transmission path corresponding to the CP transmission.

61. The communication device of claim 60, wherein the condition for switching is associated with one or more of:
a service data volume of the first service;
a congestion status of the current transmission path;
a transmission latency requirement of the first service; and
a power consumption requirement of a terminal device transmitting the first service.

62. The communication device of claim 56, wherein the first information comprises ID information corresponding to the CP transmission, and the second information comprises ID information corresponding to the UP transmission.

63. The communication device of claim 62, wherein the first device is a terminal device, and the second device is a function for sensing or location in a core network.

64. The communication device of any one of claims 49 to 52, 54 to 55, and 57 to 63, wherein the ID information corresponding to the CP transmission comprises one or more of:
a correlation ID corresponding to the first service;
a deferred routing ID corresponding to the first service; and
a session ID corresponding to the first service.

65. The communication device of any one of claims 49 to 50 and 56 to 61, wherein the UP information comprises address information of the first device.

66. The communication device of any one of claims 51 to 52, 54 to 55, and 62 to 65, wherein the ID information corresponding to the UP transmission comprises a UP session ID.

67. The communication device of any one of claims 47 to 66, wherein the first service is a location service or a sensing service.

68. A communication device, wherein the communication device comprises a second device, and the second device comprises:
a communication module configured to receive a first message sent by a first device, wherein the first message is used to configure control plane (CP) transmission and/or user plane (UP) transmission, and both the CP transmission and the UP transmission are used for service data transmission of a first service;
wherein the first message comprises first information and second information, the first information corresponds to the CP transmission, and the second information corresponds to the UP transmission.

69. The communication device of claim 68, wherein the communication module is configured to receive the first message sent by the first device during switching of the service data transmission from the CP transmission to the UP transmission.

70. The communication device of claim 69, wherein the first information comprises identity (ID) information corresponding to the CP transmission, and the second information comprises UP information for session establishment.

71. The communication device of claim 70, wherein:
the first device is a function for sensing or location in a core network, and the second device is a function for mobility management in the core network; or
the first device is the function for sensing or location in the core network, and the second device is a terminal device; or
the first device is the function for mobility management in the core network, and the second device is the terminal device.

72. The communication device of claim 69, wherein the first information comprises ID information corresponding to the CP transmission, and the second information comprises ID information corresponding to the UP transmission.

73. The communication device of claim 72, wherein the first device is a terminal device, and the second device is a function for sensing or location in a core network.

74. The communication device of claim 72 or 73, further comprising:
a first establishing module configured to establish an association relationship between the ID information corresponding to the CP transmission and the ID information corresponding to the UP transmission.

75. The communication device of claim 68, wherein the communication module is configured to receive the first message sent by the first device during switching of the service data transmission from the UP transmission to the CP transmission.

76. The communication device of claim 75, wherein the first information comprises ID information corresponding to the CP transmission, and the second information comprises ID information corresponding to the UP transmission.

77. The communication device of claim 76, wherein:
the first device is a function for sensing or location in a core network, and the second device is a function for mobility management in the core network; or
the first device is the function for sensing or location in the core network, and the second device is a terminal device; or
the first device is the function for mobility management in the core network, and the second device is the terminal device.

78. The communication device of claim 76 or 77, further comprising:
a second establishing module configured to establish an association relationship between the ID information corresponding to the CP transmission and the ID information corresponding to the UP transmission.

79. The communication device of claim 68, wherein the communication module is configured to receive the first message sent by the first device during configuring the UP transmission and the CP transmission.

80. The communication device of claim 79, wherein the first information comprises ID information corresponding to the CP transmission, and the second information comprises UP information for session establishment.

81. The communication device of claim 80, wherein:
the first device is a function for sensing or location in a core network, and the second device is a function for mobility management in the core network; or
the first device is the function for mobility management in the core network, and the second device is a terminal device.

82. The communication device of claim 80 or 81, wherein the first message further comprises third information, and the third information is used to indicate one or more of:
the first service supports switching between the CP transmission and the UP transmission; and
a condition for switching between the CP transmission and the UP transmission.

83. The communication device of claim 82, wherein the condition for switching is associated with one or more of:
a service requirement of the first service; and
a transmission status of a current transmission path;
wherein the current transmission path is a transmission path corresponding to UP transmission or a transmission path corresponding to CP transmission.

84. The communication device of claim 83, wherein the condition for switching is associated with one or more of:
a service data volume of the first service;
a congestion status of the current transmission path;
a transmission latency requirement of the first service; and
a power consumption requirement of a terminal device transmitting the first service.

85. The communication device of any one of claims 82 to 84, further comprising:
a determining module configured to determine to use the CP transmission and/or the UP transmission according to the third information.

86. The communication device of claim 79, wherein the first information comprises ID information corresponding to the CP transmission, and the second information comprises ID information corresponding to the UP transmission.

87. The communication device of claim 86, wherein the first device is a terminal device, and the second device is a function for sensing or location in a core network.

88. The communication device of claim 86 or 87, further comprising:
a third establishing module configured to establish an association relationship between the ID information corresponding to the CP transmission and the ID information corresponding to the UP transmission.

89. The communication device of any one of claims 70 to 74, 76 to 78, and 80 to 88, wherein the ID information corresponding to the CP transmission comprises one or more of:
a correlation ID corresponding to the first service;
a deferred routing ID corresponding to the first service; and
a session ID corresponding to the first service.

90. The communication device of any one of claims 70 to 71 and 80 to 85, wherein the UP information comprises address information of the first device.

91. The communication device of any one of claims 72 to 74, 76 to 78, and 87 to 88, wherein the ID information corresponding to the UP transmission comprises a UP session ID.

92. The communication device of any one of claims 68 to 91, wherein the first service is a location service or a sensing service.

93. A communication device, comprising a transceiver, a memory, and a processor, wherein the memory is configured to store computer programs, the processor is configured to invoke the computer programs stored in the memory, and to control the transceiver to receive or send signals, to cause the communication device to perform the method of any one of claims 1 to 21, or 22 to 46.

94. An apparatus, comprising a processor, wherein the processor is configured to invoke computer programs stored in a memory, to cause the apparatus to perform the method of any one of claims 1 to 21, or 22 to 46.

95. A chip, comprising a processor, wherein the processor is configured to invoke computer programs stored in a memory, to cause a device equipped with the chip to perform the method of any one of claims 1 to 21, or 22 to 46.

96. A computer-readable storage medium configured to store computer programs, wherein the computer programs are operable with a computer to perform the method of any one of claims 1 to 21, or 22 to 46.

97. A computer program product, comprising computer programs, wherein the computer programs are operable with a computer to perform the method of any one of claims 1 to 21, or 22 to 46.

98. A computer program which is operable with a computer to perform the method of any one of claims 1 to 21, or 22 to 46.
